# EUROPEAN PATENT APPLICATION

(11) **EP 4 411 968 A1**
(43) Date of publication of application: **07.08.2024**
(21) Application number: 24150015.6
(22) Date of filing: 02.01.2024
(51) Int. Cl.: H01M 50/503, H01M 50/51, H01M 50/505

(54) **BUSBAR FOR BATTERY MODULE AND BATTERY MODULE INCLUDING THE SAME**

(30) Priority: 02.02.2023 KR 20230014492
(71) Applicant: Samsung SDI Co., Ltd., Yongin-si, Gyeonggi-do 17084 (KR)
(72) Inventor: LEE, Junyoung, 17084 Yongin-si (KR); LEE, Junho, 17084 Yongin-si (KR)
(74) Representative: Marks & Clerk LLP

(57) **Abstract**

A busbar connecting cell terminals of at least two battery cells of a battery module, includes: a first contact portion extending in a first direction and connected to a first cell terminal; a second contact portion extending in the first direction and connected to a second cell terminal; and a convex portion protruding in a second direction perpendicular to the first direction and connecting the first contact portion and the second contact portion to each other, wherein in the first contact portion, a first edge adjacent to an outer side surface of a width direction of the battery cell is inside an edge of the first cell terminal, and in the second contact portion, a second edge adjacent to an outside of the width direction of the battery cell is inside an edge of the second cell terminal.

## Description

### BACKGROUND

### 1. Field

Aspects of some embodiments of the present disclosure relate to a busbar for a battery module and a battery module including the same.

### 2. Description of the Related Art

Secondary batteries differ from primary batteries that may only convert chemical energy into electrical energy in that secondary batteries may generally be repeatedly charged and discharged. Low-capacity secondary batteries may be used to supply power to small electronic devices such as mobile phones, laptops, computers, and camcorders, while high-capacity secondary batteries may be used to supply power to hybrid vehicles and the like.

In general, a secondary battery may include an electrode assembly including a positive electrode, a negative electrode, and a separator interposed between the positive and negative electrodes, a case accommodating the electrode assembly, and an electrode terminal electrically connected to the electrode assembly.

An electrolyte may be injected into the case to enable charging and discharging of the battery through an electrochemical reaction between the positive electrode, the negative electrode, and the electrolyte. The case may be manufactured to have, for example, a cylindrical shape or a prismatic shape to be suitable for the purpose of using the battery.

A secondary battery may be used as a battery module formed of a plurality of unit battery cells connected in series and/or in parallel to provide high energy density (for example, for driving a motor of a hybrid vehicle).

For example, the battery module may be formed by connecting electrode terminals of the plurality of unit batteries to each other in order to meet a required amount of power and to implement, for example, a high-power secondary battery of an electric vehicle. The battery module may have a block structure or a module structure.

In the block structure, each battery cell may be connected to a common current collector structure and a common battery management system. In the module structure, a sub-module may be formed by connecting a plurality of battery cells, and a battery module may be formed by connecting a plurality of sub-modules.

A battery management function may be at least partially realized at a module or sub-module level, thereby relatively improving compatibility. In order to configure a battery system, at least one or more battery modules have a thermal management system are mechanically and electrically integrated, and are configured to be connected to at least one or more electricity consuming devices.

A plurality of busbars may be used to electrically interconnect the battery cells of the battery module and the battery submodules. The busbar may be further configured to be connected to the battery module terminal to allow a load having a current provided by the battery module to be supplied to the outside.

The busbars may further consider aspects such as, for example, cell expansion compensation during operation of the battery module or integration of shunt resistors in the busbar. However, in many cases, a busbar may be made of a simple bar-shaped aluminium strip to simplify the configuration of the battery module.

On the other hand, if an impact caused by an external force is transmitted to the battery module, a cap plate may be bent and/or deformed, and thus an edge of the busbar protruding to the outside of the cell terminal and a surface of the cap plate may contact each other, which may cause a short circuit, thereby deteriorating battery stability.

The above information disclosed in this Background section is only for enhancement of understanding of the background and therefore the information discussed in this Background section does not necessarily constitute prior art.

### SUMMARY

Aspects of some embodiments of the present disclosure include a busbar for a battery module and a battery module including the same that may relatively improve stability by preventing or reducing a short circuit caused by the busbar even if a cap plate is deformed by an external impact.

Aspects of some embodiments of the present disclosure include a busbar that connects cell terminals of at least two battery cells of a battery module, including: a first contact portion extending in a first direction to be connected to a first cell terminal; a second contact portion extending in the first direction to be connected to a second cell terminal; and a convex portion that protrudes in a second direction perpendicular to the first direction to connect the first contact portion and the second contact portion to each other.

In the first contact portion, a first edge adjacent to an outer side surface of a width direction of the battery cell is inside an edge of the first cell terminal.

In the second contact portion, a second edge adjacent to the outside of the width direction of the battery cell is inside an edge of the second cell terminal.

According to some embodiments, the battery module may have a rectangular shape having a wide first side surface extending in a length direction and a narrow second side surface perpendicular to the first side surface.

According to some embodiments, the first edge of the first contact portion may be at the inside of an edge of the first cell terminal at a position of the second side surface.

According to some embodiments, the second edge of the second contact portion may be at the inside of an edge of the second cell terminal at a position of the second side surface.

According to some embodiments, in the first contact portion, a first through-hole may be formed in a direction of the convex portion from a third edge perpendicular to the first edge.

According to some embodiments, the first through-hole may have a long hole shape that extends from the third edge in the direction of the convex portion.

According to some embodiments, in the second contact portion, a second through-hole may be formed in the direction of the convex portion from a fourth edge perpendicular to the second edge.

According to some embodiments, the second through-hole may have a long hole shape that extends from the fourth edge in the direction of the convex portion.

According to some embodiments, the first through-hole and the second through-hole may be respectively formed in the first contact portion and the second contact portion at positions facing each other.

According to some embodiments, the convex portion may be formed with a third through-hole having a long length in the first direction between the first contact portion and the second contact portion.

According to some embodiments, the convex portion may have a first portion on one side thereof and a second portion on the other side thereof that are formed to have the same length based on the third through-hole.

According to some embodiments, a first extension may protrude from an edge opposite to the first edge in the first contact portion.

According to some embodiments, a protruding edge of the first extension may be formed to be inclined in the direction of the convex portion.

According to some embodiments, a second extension protrudes from an edge opposite to the second edge in the second contact portion.

According to some embodiments, the second extension may include a first protrusion protruding with a first length at an edge opposite to the second edge of the second contact portion, and a second protrusion having a second length protruding in a state connected to the first protrusion at an edge opposite to the second edge of the second contact portion.

According to some embodiments of the present disclosure, a battery module includes: a plurality of battery cells arranged along a length direction of a battery module; and a plurality of busbars (e.g. a busbar as disclosed herein), wherein each of the plurality of the busbars electrically connects at least two battery cells, at least one first contact portion of the plurality of the busbars is electrically connected to a cell terminal having a first polarity, and at least one second contact portion of the plurality of the busbars is electrically connected to a cell terminal having a second polarity.

According to some embodiments of the present disclosure, by preventing or reducing instances of an edge of a busbar protruding to the outside of a cell terminal, a short circuit may not occur even if a battery cell is deformed by an external impact, thereby relatively improving battery stability.

At least some of the above and other features of the invention are set out in the claims.

### BRIEF DESCRIPTION OF THE DRAWINGS

FIG. 1 illustrates a schematic perspective view of a battery module according to some embodiments of the present disclosure.
FIG. 2 illustrates a schematic perspective view of a state in which a busbar is connected between a pair of battery cells of FIG. 1 according to some embodiments of the present disclosure.
FIG. 3 illustrates a schematic perspective view of a busbar according to some embodiments of the present disclosure.
FIG. 4 illustrates a partial top plan view of a state in which a busbar according to some embodiments of the present disclosure is connected to cell terminals of a pair of battery cells.
FIG. 5 illustrates a schematic partial top plan view of a state in which the busbar is located on an upper portion of a cell terminal in a state in which the busbar of FIG. 3 is connected to a cell terminal of a pair of battery cells according to some embodiments of the present disclosure.
FIG. 6 illustrates a schematic partial cross-sectional view of a state in which the busbar of FIG. 3 is connected to a cell terminal according to some embodiments of the present disclosure.

### DETAILED DESCRIPTION

Aspects of some embodiments of the present disclosure will be described more fully hereinafter with reference to the accompanying drawings, in which embodiments of the disclosure are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

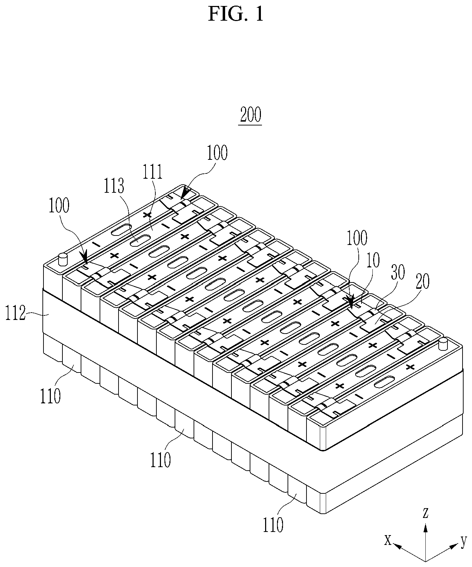

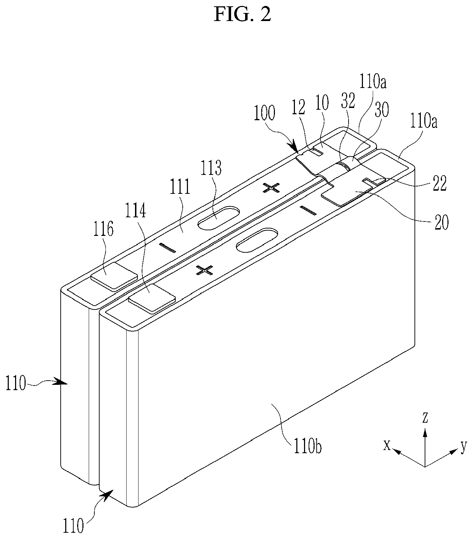

FIG. 1 illustrates a schematic perspective view of a battery module according to some embodiments of the present disclosure. FIG. 2 illustrates a schematic perspective view of a state in which a busbar is connected between a pair of battery cells of FIG. 1.

As shown in FIG. 1 and FIG. 2, a battery module 200 according to some embodiments of the present disclosure includes a plurality of battery cells 110 and a plurality of busbars 100 arranged along a length direction of the battery module.

The plurality of battery cells 110 of the battery module 200 has a battery case 112 in which a cap plate 111 is located on the battery case 112, and a vent 113 may be located in the cap plate 111.

The battery cells 110 in the battery module 200 may have wide side surfaces and may be stacked in the length direction such that first sidewalls of adjacent battery cells 110 face each other.

The battery module 200 may include a rectangular shape having a wide first side surface 110a extending in the length direction and a narrow second side surface 110b perpendicular to the first side surface 110a.

One positive terminal 114 (e.g. a first cell terminal) and one negative terminal 116 (e.g. a second cell terminal) of adjacent battery cells 110 of each pair may be electrically connected through the busbar 100.

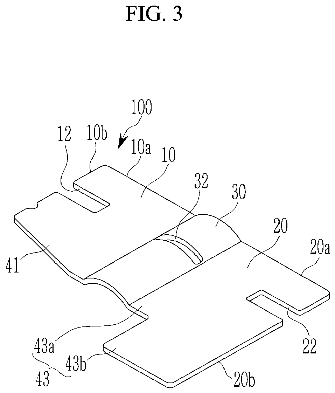

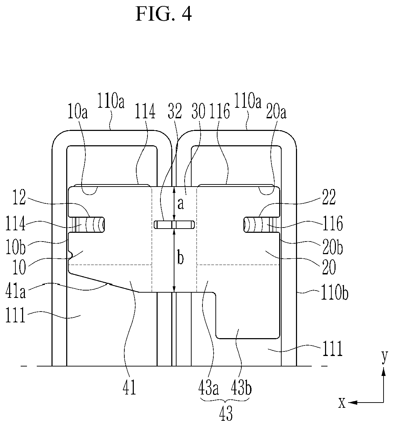

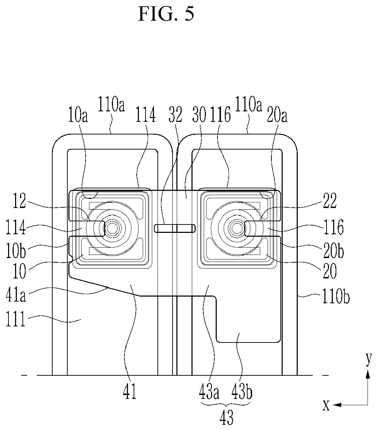

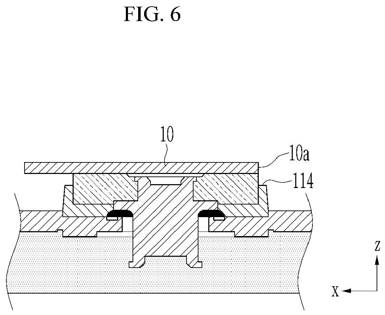

FIG. 3 illustrates a schematic perspective view of a busbar according to some embodiments of the present disclosure, FIG. 4 illustrates a partial top plan view of a state in which a busbar according to some embodiments of the present disclosure are connected to cell terminals of a pair of battery cells, FIG. 5 illustrates a schematic partial top plan view of a state in which the busbar is located on an upper portion of a cell terminal in a state in which the busbar of FIG. 3 is connected to a cell terminal of a pair of battery cells, and FIG. 6 illustrates a schematic partial cross-sectional view of a state in which the busbar of FIG. 3 is connected to a cell terminal.

As shown in FIG. 3 to FIG. 6, the busbar 100 for the battery module according to some embodiments of the present disclosure is a busbar for connecting the cell terminals of at least two battery cells of the battery module 200, and may include a first contact portion 10 extending in a first direction (x-axis) to be connected to the first cell terminal 114, a second contact portion 20 extending in the first direction (x-axis) to be connected to the second cell terminal 116, and a convex portion 30 that protrudes in a second direction (z-axis) perpendicular to the first direction (x-axis) to connect the first contact portion 10 and the second contact portion 20 to each other.

Here, the first contact portion 10 and the second contact portion 20 may have a planar shape, and may extend in the first direction to be connected corresponding to the shape and size of the cell terminals 114 and 116 of the plane.

Accordingly, in a state in which the first contact portion 10 and the second contact portion 20 are located on upper surfaces of the cell terminals 114 and 116, the busbar 100 and the battery cell 110 may be connected to each other by welding, soldering, or other methods.

The first contact portion 10 is electrically connected to the first cell terminal 114 of the first polarity (e.g. positive terminal), and may extend long in the first direction, which is a width direction of the battery cell 110, to be electrically connected to the first cell terminal 114 by welding or the like while being in surface contact with the first cell terminal 114.

For example, the first contact portion 10 has a plate shape in which a flat surface electrically contacting the first cell terminal 114 is formed, and may extend in the width direction of the battery cell 110 and connected to the convex portion 30.

An edge portion of the first contact portion 10 adjacent to the first side surface 110a in the length direction of the rectangular battery module 200 may be located inside an edge of the first cell terminal 114.

For example, the first contact portion 10 may be coupled to the first cell terminal 114 by welding or the like while a first edge portion 10a thereof does not protrude to the outside of the edge of the first cell terminal 114.

In this way, positioning the first edge portion 10a of the first contact portion 10 at an inner portion of the edge of the first cell terminal 114 is for preventing or reducing instances of a short circuit occurring if the battery cell 110 is deformed due to an impact by preventing or reducing instances of the first edge portion 10a of the first contact portion 10 protruding outward from the edge of the first cell terminal 114.

For example, if an impact is applied to the battery module 200, the cap plate 111 of the battery cell 110 may be deformed to contact the busbar 100 or the cell terminals 114 and 116.

Accordingly, the edge portion of the first contact portion 10 configuring the busbar 100 according to some embodiments may be formed to be located inside the first cell terminal 114, so that even if the battery module 200 is deformed by an impact, it may be possible to prevent or reduce instances of a short circuit occurring.

A first through-hole 12 may be formed on a side surface of the first contact portion 10.

The first through-hole 12 may be formed in an inner direction from a third edge 10b located on the second side surface 110b of the battery cell 110 in the first contact portion 10.

The first through-hole 12 may have a long hole shape having a long length from the third edge 10b toward the inside of the first contact portion 10.

In this way, the formation of the first through-hole 12 in the first contact portion 10 is for compensating for shape deformation due to welding heat in the process of connecting the first contact portion 10 to the first cell terminal 114 by welding and the like so that a relatively stable connection may be possible.

The long shape of the first through-hole 12 is illustratively described, but embodiments according to the present disclosure are limited thereto, and an appropriate shape modification for smooth compensation of welding heat may also be performed.

The second contact portion 20 is electrically connected to the second cell terminal 116 of the second polarity (e.g. negative terminal), and may extend long in the first direction, which is a width direction of the battery cell 110, to be electrically connected to the second cell terminal 116 by welding or the like while being in surface contact with the second cell terminal 116.

A second edge 20a of the second contact portion 20 adjacent to the first side surface 110a in the width direction of the battery cell 110 may be located inside an edge of the second cell terminal 116.

For example, the second contact portion 20 may be coupled to the second cell terminal 116 by welding or the like while an edge portion thereof does not protrude to the outside of the edge of the second cell terminal 116.

In this way, by positioning the edge portion of the second contact portion 20 at an inner portion of the edge of the second cell terminal 116, preventing or reducing instances of the edge portion of the second contact portion 20 protruding outward from the edge of the second cell terminal 116 is for preventing or reducing instances of a short circuit occurring if the battery cell 110 is deformed due to an impact.

A second through-hole 22 may be formed on a side surface of the second contact portion 20.

The second through-hole 22 may be formed in an inner direction from a fourth edge 20b located on the second side surface 110b of the battery cell 110 in the second contact portion 20.

The second through-hole 22 may have a long hole shape having a long length from the fourth edge 20b in the inner direction of the second contact portion 20.

In this way, the formation of the second through-hole 22 in the second contact portion 20 is for compensating for shape deformation due to welding heat in the process of connecting the second contact portion 20 to the second cell terminal 116 by welding and the like so that a relatively stable connection may be possible.

The first through-hole 12 and the second through-hole 22 described above may be formed at positions facing each other at the respective edges of the first contact portion 10 and the second contact portion 20 with the convex portion 30 interposed therebetween. The first through-hole 12 and the second through-hole 22 may be formed to have the same shape and/or the same size according to some embodiments, but embodiments according to the present disclosure are not limited thereto. For example, according to some embodiments, the first through-hole 12 and the second through-hole 22 may have different shapes and/or sizes.

As described above, because the first edge 10a of the first contact portion 10 and the second edge of the second contact portion 20 are located inside the edge of the cell terminal in the state in which the first contact portion 10 and the second contact portion 20 are respectively connected to the first cell terminal 114 and the second cell terminal 116 by welding or the like, it may be possible to prevent or reduce instances of a short circuit occurring even in the event of deformation of the cap plate 111 or the like due to the impact of the battery cell 110 occurs.

Meanwhile, the first contact portion 10 and the second contact portion 20 may be connected by the convex portion 30.

The convex portion 30 may electrically connect the first contact portion 10 and the second contact portion 20 at a position between the first cell terminal 114 and the second cell terminal 116. For example, the convex portion 30 has one side connected to the side surface of the first contact portion 10 and the other side connected to the side surface of the second contact portion 20, and may be connected in a protruding state in a round shape.

The convex portion 30 is a portion through which a current flows between the first contact portion 10 and the second contact portion 20, and may be formed to have a width in which a maximum temperature of the busbar 100 generated while the current flows is maintained at 70 degrees Celsius or less.

A third through-hole 32 may be formed in the convex portion 30.

The third through-hole 32 may be formed with a long length in the first direction between the first contact portion 10 and the second contact portion 20.

A portion of the convex portion 30 may extend between a first extension 41 and a second extension 43 to be described later.

The convex portion 30 may have a first portion (a, see FIG. 4) on one side (e.g. of the third through-hole 32) and a second portion (b, see FIG. 4) on the other side (e.g. of the third through-hole 32) formed to have the same length based on the third through-hole 32.

However, the first portion (a) and the second portion (b) of the convex portion 30 are not necessarily limited to being formed to have the same length, and the second portion (b) may be formed to be longer than the first portion (a). In this case, the second portion (b) may be formed longer in a ratio range of 1.09:1 to 1.11:1 with respect to the length of the first portion. As described above, the length of the first portion (a) and the second portion (b) of the convex portion 30 are formed to be different because the length of the busbar 100 may be changed by a structural change in which the busbar 100 is connected to the first cell terminal 114 and the second cell terminal 116.

Meanwhile, the extensions 41 and 43 may be formed on side surfaces of the first contact portion 10 and the second contact portion 20 in the busbar 100.

The first extension 41 may be formed on the side surface of the first contact portion 10.

The first extension 41 may protrude at an edge opposite to the first edge 10a of the first contact portion 10.

In this way, the protrusion of the first extension 41 at the first contact portion 10 is for securing structural stability in the process of connecting the busbar 100 to the cell terminals 114 and 116 by welding or the like.

The first extension 41 may be formed such that a protruding edge portion 41 a is inclined in the direction of the convex portion 30 from one side of the third edge 10b (e.g. such that the first extension 41 is wider at a position closer to the convex portion 30 compared to a position away from the convex portion 30). This is to secure structural stability while avoiding interference between the first extension 41 and adjacent parts (e.g., predetermined adjacent parts).

Meanwhile, the second extension 43 may be formed on the side surface of the second contact portion 20.

The second extension 43 may protrude at an edge position opposite to the second edge 20a of the second contact portion 20.

For example, the second extension 43 may include a first protrusion 43a of a first length protruding from an edge opposite to the second edge 20a in the second contact portion 20 and a second protrusion 43b of a second length protruding from an edge opposite to the second edge 20a of the second contact portion 20.

The first protrusion 43a may protrude with the first length to the side surface of the second contact portion 20 between the second protrusion 43b and the convex portion 30. Here, the first length may be the same length as the protruding length of the first protrusion 43a.

The second protrusion 43b protrudes from the second contact portion 20 at the side surface of the first protrusion 43a, and it may protrude by a second length different from the first length. Here, the second length of the second protrusion 43b may be 2 to 2.5 times more than the first length.

As described above, the reason why the second protrusion 43b protrudes from the side surface of the second contact portion 20 with the second length different from the length of the first protrusion 43a is to sufficiently ensure structural stability in which the second contact portion 20 is connected to the second cell terminal 116.

In the present embodiments, it is illustratively described that the extensions 41 and 43 include the first extension 41 and the second extension 43 of different lengths, but the present disclosure is not necessarily limited thereto, it is also possible to change the protruding length to ensure the structural stability of the busbar 100.

As described above, the busbar 100 according to some embodiments of the present disclosure, prevents or reduces instances of the edge portions of the first contact portion 10 and the second contact portion 20 configuring the busbar 100 protruding to the outside of the cell terminals 114 and 116, so that if the battery cell 110 is deformed due to an external impact, it is possible to improve stability by preventing or reducing instances of a short circuit occurring.

While aspects of some embodiments of the present disclosure have been described in connection with what is presently considered to be practical embodiments, it is to be understood that embodiments according to the present disclosure are not limited to the embodiments specifically described herein, but, on the contrary, is intended to cover various modifications and equivalent arrangements included within the scope of the appended claims, and their equivalents.

### Description of Some of the Reference Symbols

10 first contact portion
10a first edge
10b third edge
12 first through-hole
20 second contact portion
20a second edge
20b fourth edge
22 second through-hole
30 convex portion
32 third through-hole
41 first extension
43 second extension
43a first protrusion
43b second protrusion
100 busbar
110a first side surface
110b second side surface
111 cap plate
112 battery case
113 vent

The present invention may be defined by reference to the following clauses:
Clause 1. A busbar connecting cell terminals of at least two battery cells of a battery module, comprising:
   a first contact portion extending in a first direction and connected to a first cell terminal;
   a second contact portion extending in the first direction and connected to a second cell terminal; and
   a convex portion protruding in a second direction perpendicular to the first direction and connecting the first contact portion and the second contact portion to each other,
   wherein in the first contact portion, a first edge adjacent to an outer side surface of a width direction of the battery cell is inside an edge of the first cell terminal, and
   in the second contact portion, a second edge adjacent to an outside of the width direction of the battery cell is inside an edge of the second cell terminal.
Clause 2. The busbar according to clause 1, wherein
   the battery module has a rectangular shape having a wide first side surface extending in a length direction and a narrow second side surface perpendicular to the first side surface, and
   a first edge of the first contact portion is at an inside of an edge of the first cell terminal at a position of the second side surface.
Clause 3. The busbar of clause 2, wherein
   a second edge of the second contact portion is at an inside of an edge of the second cell terminal at a position of the second side surface.
Clause 4. The busbar according to any one of clauses 1 to 3, wherein
   in the first contact portion, a first through-hole is formed in a direction of the convex portion from a third edge perpendicular to the first edge.
Clause 5. The busbar according to clause 4, wherein
   the first through-hole has a long hole shape that extends from the third edge in the direction of the convex portion.
Clause 6. The busbar according to any one of clauses 1 to 5, wherein
   in the second contact portion, a second through-hole is formed in the direction of the convex portion from a fourth edge perpendicular to the second edge.
Clause 7. The busbar according to clause 6, wherein
   the second through-hole has a long hole shape that extends from the fourth edge in the direction of the convex portion.
Clause 8. The busbar according to clause 6 or clause 7, as dependent on clause 4 or clause 5, wherein
   the first through-hole and the second through-hole are respectively formed in the first contact portion and the second contact portion at positions facing each other.
Clause 9. The busbar according to any one of clauses 1 to 8, wherein
   the convex portion is formed with a third through-hole having a long length in the first direction between the first contact portion and the second contact portion.
Clause 10. The busbar according to clause 9, wherein
   the convex portion has a first portion on one side thereof and a second portion on the other side thereof that are formed to have the same length based on the third through-hole.
Clause 11. The busbar according to any one of clauses 1 to 10, wherein
   a first extension protrudes from an edge opposite to the first edge in the first contact portion.
Clause 12. The busbar according to clause 11, wherein
   a protruding edge of the first extension is inclined in the direction of the convex portion.
Clause 13. The busbar according to any one of clauses 1 to 12, wherein the second extension includes:
   a first protrusion protruding with a first length at an edge opposite to the second edge of the second contact portion; and
   a second protrusion having a second length protruding in a state connected to the first protrusion at an edge opposite to the second edge of the second contact portion.
Clause 14. A battery module comprising:
   a plurality of battery cells arranged along a length direction of a battery module; and
   a plurality of the busbars according to any one of clauses 1 to 13,
   wherein each of the plurality of the busbars electrically connects at least two battery cells, at least one first contact portion of the plurality of the busbars is electrically connected to a cell terminal having a first polarity, and at least one second contact portion of the plurality of the busbars is electrically connected to a cell terminal having a second polarity.

## Claims

1. A busbar connecting cell terminals of at least two battery cells of a battery module, comprising:
a first contact portion extending in a first direction and connected to a first cell terminal;
a second contact portion extending in the first direction and connected to a second cell terminal; and
a convex portion protruding in a second direction perpendicular to the first direction and connecting the first contact portion and the second contact portion to each other,
wherein in the first contact portion, a first edge adjacent to an outer side surface of a width direction of the battery cell is inside an edge of the first cell terminal, and
in the second contact portion, a second edge adjacent to an outside of the width direction of the battery cell is inside an edge of the second cell terminal.

2. The busbar as claimed in claim 1, wherein
the battery module has a rectangular shape having a wide first side surface extending in a length direction and a narrow second side surface perpendicular to the first side surface, and
the first edge of the first contact portion is at an inside of an edge of the first cell terminal at a position of the second side surface.

3. The busbar as claimed in claim 1 or claim 2, wherein
the battery module has a rectangular shape having a wide first side surface extending in a length direction and a narrow second side surface perpendicular to the first side surface, and
the second edge of the second contact portion is at an inside of an edge of the second cell terminal at a position of the second side surface.

4. The busbar as claimed in any one of claims 1 to 3, wherein
in the first contact portion, a first through-hole is formed in a direction of the convex portion from a third edge perpendicular to the first edge.

5. The busbar as claimed in claim 4, wherein
the first through-hole has a long hole shape that extends from the third edge in the direction of the convex portion.

6. The busbar as claimed in any one of claims 1 to 5, wherein
in the second contact portion, a second through-hole is formed in the direction of the convex portion from a fourth edge perpendicular to the second edge.

7. The busbar as claimed in claim 6, wherein
the second through-hole has a long hole shape that extends from the fourth edge in the direction of the convex portion.

8. The busbar as claimed in claim 6 or claim 7, as dependent on claim 4 or claim 5, wherein
the first through-hole and the second through-hole are respectively formed in the first contact portion and the second contact portion at positions facing each other.

9. The busbar as claimed in any one of claims 1 to 8, wherein
the convex portion is formed with a third through-hole having a long length in the first direction between the first contact portion and the second contact portion.

10. The busbar as claimed in claim 9, wherein
the convex portion has a first portion on one side of the third through-hole thereof and a second portion on the other side of the third through-hole thereof that are formed to have the same length based on the third through-hole.

11. The busbar as claimed in any one of claims 1 to 10, wherein
a first extension protrudes from an edge opposite to the first edge in the first contact portion.

12. The busbar as claimed in claim 11, wherein
a protruding edge of the first extension is inclined in the direction of the convex portion.

13. The busbar as claimed in any one of claims 1 to 12, wherein
a second extension protrudes from an edge opposite to the second edge in the second contact portion.

14. The busbar as claimed in claim 13, wherein the second extension includes:
a first protrusion protruding with a first length at an edge opposite to the second edge of the second contact portion; and
a second protrusion having a second length protruding in a state connected to the first protrusion at an edge opposite to the second edge of the second contact portion.

15. A battery module comprising:
a plurality of battery cells arranged along a length direction of a battery module; and
a plurality of the busbars according to any one of claims 1 to 14,
wherein each of the plurality of the busbars electrically connects at least two battery cells, at least one first contact portion of the plurality of the busbars is electrically connected to a cell terminal having a first polarity, and at least one second contact portion of the plurality of the busbars is electrically connected to a cell terminal having a second polarity.
